Europäisches Patentamt

European Patent Office

Office européen des brevets

(19)

(11) Numéro de publication: **0 311 191**
**A1**

(12) **DEMANDE DE BREVET EUROPEEN**

(21) Numéro de dépôt: **88202133.0**

(22) Date de dépôt: **29.09.88**

(51) Int. Cl.⁴: **H04N 7/00 , H04N 7/12**

(30) Priorité: **09.10.87 FR 8713982**

(43) Date de publication de la demande:
**12.04.89 Bulletin 89/15**

(84) Etats contractants désignés:
**DE FR GB IT**

(71) Demandeur: **Laboratoires d'Electronique et de Physique Appliquée L.E.P.**
**3, Avenue Descartes**
**F-94450 Limeil-Brévannes(FR)**

(84) **FR**

(71) Demandeur: **N.V. Philips' Gloeilampenfabrieken**
**Groenewoudseweg 1**
**NL-5621 BA Eindhoven(NL)**

(84) **DE GB IT**

(72) Inventeur: **Fonsalas, Frédéric**
**Société Civile S.P.I.D. 209 Rue de l'Université**
**F-75007 Paris(FR)**
Inventeur: **Hayet, Pascal**
**Société Civile S.P.I.D. 209 Rue de l'Université**
**F-75007 Paris(FR)**
Inventeur: **Lejard, Jean-Yves**
**Société Civile S.P.I.D. 209 Rue de l'Université**
**F-75007 Paris(FR)**
Inventeur: **Le Queau, Marcel**
**Société Civile S.P.I.D. 209 Rue de l'Université**
**F-75007 Paris(FR)**

(74) Mandataire: **Chaffraix, Jean et al**
**Société Civile S.P.I.D. 209, rue de l'Université**
**F-75007 Paris(FR)**

(54) **Système de transmission d'images à haute définition par un canal présentant une bande passante relativement étroite, ainsi qu'un récepteur et un émetteur convenant pour le système.**

(57) Dans ce système on a prévu une transmission de certains points d'une image à haute définition de sorte que du côté réception il est possible de restituer une image à définition normale sans qu'il soit nécessaire d'utiliser de circuit supplémentaire.

FIG. 4

## SYSTEME DE TRANSMISSION D'IMAGES A HAUTE DEFINITION PAR UN CANAL PRESENTANT UNE BANDE PASSANTE RELATIVEMENT ETROITE, AINSI QU'UN RECEPTEUR ET UN EMETTEUR CONVENANT POUR LE SYSTEME.

La présente invention concerne un système de transmission d'images de télévision à haute définition par un canal présentant une bande passante relativement étroite, système comportant d'une part, une partie émission munie d'un organe de prise de vue pour fournir des échantillons qui définissent les points formant lesdites images, points placés en des positions qui sont réparties dans les images selon des lignes de parités différentes, d'un organe de filtrage pour filtrer lesdits échantillons, d'un organe de sous-échantillonnage pour prélever certains échantillons à la sortie de l'organe de filtrage et d'un circuit émetteur pour transmettre sur le canal, selon quatre trames d'émission, les échantillons prélevés et d'autre part, au moins une partie réception munie d'un circuit récepteur pour recevoir les échantillons provenant du circuit émetteur. La présente invention concerne aussi un récepteur et un émetteur convenant pour le système.

De tels systèmes sont bien connus et sont susceptibles de trouver d'importantes applications notamment pour la transmission d'images à haute définition compatible avec les standards "MAC" et plus particulièrement le standard "D2-MAC" (avis 601 du C.C.I.R.).

Un système connu de ce genre est décrit dans l'article "A SINGLE CHANNEL HDTV BROADCAST SYSTEM -THE MUSE-" de Yuichi Ninomiya et autres..., paru dans la revue "NHK LABORATORIES NOTE" série 304 de septembre 1984. Ce système MUSE non adapté aux standards précités peut l'être aisément en modifiant d'une manière linéaire ses différents paramètres caractéristiques. Ce système connu utilise, pour transmettre les échantillons d'une image, une structure d'échantillonnage qui s'étale sur quatre trames. Des points appartenant à différen tes positions spatiales sont transmis dans ces quatre trames consécutives.

Bien que ces systèmes soient conçus pour transmettre des images à haute définition, on s'impose aussi une compatibilité pour que la réception de ces images puisse s'effectuer avec un récepteur adapté à définition normale. La réception normale selon le standard D2-MAC/paquet assure donc une image à définition plus faible.

La présente invention propose un système du genre mentionné ci-dessus qui assure cette compatibilité dans de bonnes conditions sans nécessiter de circuits supplémentaires coûteux.

Pour cela, un tel système est remarquable en ce que l'organe de sous-échantillonnage prélève des échantillons de la manière suivante en considérant des séries de quatre positions successives placées sur des lignes de même parité et en considérant un décalage de deux positions entre deux lignes adjacentes de ladite même parité :

- la première trame d'émission transmet, pour chaque ligne de ladite parite et pour sa première ligne adjacente de ladite même parité, des échantillons relatifs à la première position des séries,

- la deuxième trame d'émission transmet, pour chaque ligne de ladite parité et pour sa deuxième ligne adjacente de ladite même parité, des échantillons relatifs à la deuxième position des séries,

- la troisième trame d'émission transmet, pour chaque ligne de ladite parité et pour sa première ligne adjacente de ladite même parité, des échantillons relatifs à la troisième position des séries,

- la quatrième trame d'émission transmet pour chaque ligne de ladite parité et pour sa deuxième ligne adjacente de ladite même parité, des échantillons relatifs à la quatrième position des séries,

tandis que la partie réception est munie en outre d'un premier circuit de visualisation pour transformer les échantillons transmis en une image à définition normale.

La description suivante, accompagnée des dessins ci-annexés, le tout donné à titre d'exemple non limitatif, fera bien comprendre comment l'invention peut être réalisée.

La figure 1 représente le système de l'invention.

La figure 2 représente la structure d'échantillonnage du système connu.

La figure 3 est une légende qui indique les points transmis selon différentes trames de transmission.

La figure 4 représente la structure d'échantillonnage de l'invention.

La figure 5 est une légende pour expliquer la transmission des points selon des trames de transmission, conformément à l'invention.

La figure 6 indique dans le domaine spatio-fréquentiel de Fourier les points de repliement de spectre.

La figure 7 représente la structure de l'organe de filtrage.

La figure 8 représente en détail la structure d'un premier filtre faisant partie de l'organe de filtrage.

La figure 9 représente en détail la structure d'un deuxième filtre faisant partie de l'organe de filtrage.

La figure 10 représente le schéma d'un organe de recalage temporel faisant partie de l'organe de filtrage.

La figure 11 représente en détail la structure d'un troisième filtre faisant partie de l'organe de filtrage.

La figure 12 représente le schéma d'un organe de sous-échantillonnage et d'un organe de réarrangement.

La figure 13 représente le schéma d'un organe d'interpolation.

La figure 14 représente un filtre faisant partie de l'organe d'interpolation, et la figure 15 un organe de recalage temporel associé.

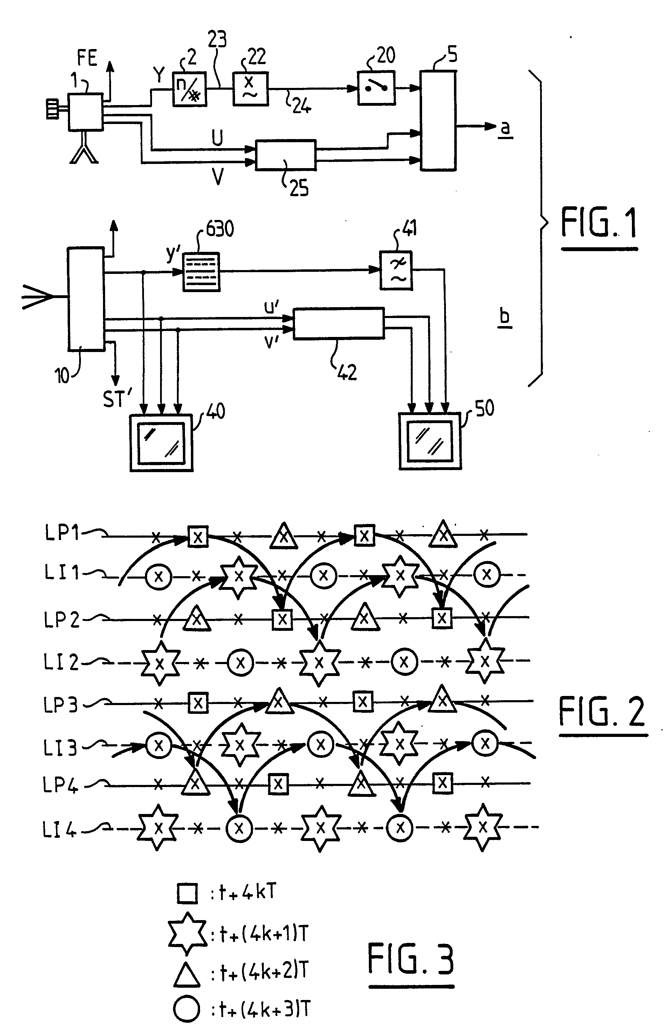

Le système de la figure 1 est formé d'une partie émission représentée en a et d'une partie réception représentée en b.

Sur cette figure 1, la référence 1 indique une caméra de télévision à haute définition fournissant sous forme analogique les signaux de luminance Y et de différence de couleur U et V. Dans le présent exposé, on s'intéressera surtour aux signaux de luminance car ce sont eux qui posent le plus de problèmes de transmission. Un traitement similaire à celui qui va être décrit peut être effectué sur les signaux U et V avec cependant une cadence beaucoup moins élevée. Un convertisseur analogique-numérique 2 fournit différents échantillons numériques dont chacun représente la luminance d'un point d'image. Ces échantillons surgissent à des instants t, t+TP, t+2TP,... avec TP = 1/(54 MHz) et définissent une image entrelacée comportant 1250 lignes, ce qui représente une définition double des images normales à 625 lignes classiques, tant en direction verticale qu'en direction horizontale. Comme on veut transmettre cette image au moyen d'un circuit de transmission 5-10 fonctionnant selon une norme MAC et formé d'un circuit émetteur 5 et d'un circuit récepteur 10, il ne faut transmettre que quelques-uns de ces échantillons ; pour cela on utilise un organe de sous-échantillonnage 20 précédé d'un organe de filtrage 22 muni d'une borne d'entrée 23 et d'une borne de sortie 24. Les signaux U et V subissent le même traitement effectué par l'organe 25 à une fréquence deux fois moindre.

Le circuit de réception 10 fournit les signaux de luminance et de différence de couleur Y', U' et V' respectivement d'une part, à un téléviseur 40 pour la restitution d'une image de télévision à définition normale et d'autre part, à des organes d'interpolation 41 et 42 pour élaborer des points supplémentaires à partir des points reçus afin qu'un deuxième téléviseur 50 fournisse une image à haute définition.

Pour bien comprendre l'intérêt de l'invention, on va analyser le dispositif "MUSE" décrit dans la référence don née ci-dessus. On se rapporte plus particulièrement à la structure d'échantillonnage. Pour la discussion qui va suivre, on a représenté cette structure à la figure 2. Chaque image est décomposée en points (représentés par des croix) qui sont répartis selon des lignes paires LP (en traits continus) ...,LP1, LP2, LP3, LP4,... et selon des lignes impaires (en tirets) ...,LI1, LI2, LI3, LI4,... Ces différents points sont placés dans des positions telles qu'ils sont aussi alignés verticalement.

Pour chacun de ces points qui constituent l'image de haute qualité, le convertisseur 2 va fournir un échantillon numérique. Ces échantillons vont être filtrés par l'organe de filtrage 22 et seuls quelques-uns seront transmis dans quatre trames dites trames de transmission.

Dans une première trame de transmission, on transmet aux instants t+4kT (où k = 0, 1, 2,... et T = durée d'une trame) tous les échantillons relatifs aux points entourés d'un carré. Ces échantillons sont prélevés sur les lignes paires : un sur quatre et en quinconce.

Dans une deuxième trame de transmission, on transmet aux instant t+(4k+1)T tous les échantillons relatifs aux points entourés d'une étoile. Ces échantillons sont prélevés sur des lignes impaires : un sur quatre et en quinconce. De plus, les points que ces échantillons représentent sont décalés d'une position sur la droite par rapport aux points transmis aux instants t+4kT, entourés d'un carré.

Dans une troisième trame de transmission, on transmet aux instants t+(4k+2)T tous les échantillons relatifs aux points entourés d'un triangle. A nouveau c'est sur les lignes paires que ces échantillons sont prélevés : un sur quatre et en quinconce. Les points considérés sont décalés de deux positions sur la droite par rapport à ceux entourés d'une étoile.

Enfin dans une quatrième trame de transmission, on transmet aux instants t+(4k+3)T tous les échantillons relatifs aux points entourés d'un cercle. Ces échantillons proviennent des lignes impaires et les points qu'ils représentent sont décalés de deux positions vers la droite par rapport aux points entourés d'une étoile.

La figure 3 est une légende qui rappelle la transmission par trames des différents échantillons certains survenant successivement aux instants t+4kT, t+(4k+1)T, t+(4k+2)T, t+(4k+3)T.

3

Afin de faciliter les explications, on extrapole à 1250 lignes le système MUSE précité. Pour un récepteur MAC à définition normale, seules 625 lignes sont utiles. Pour assurer la compatibilité, on combine les échantillons relatifs à deux lignes selon la manière suivante, indiquée par des flèches sur la figure 2.

Dans une première trame, on transmet les points entourés d'un carré et l'on examine plus particulièrement ceux qui appartiennent aux lignes LP1 et LP2 ; on observe que ces points sont situés de part et d'autre d'une première ligne médiane qui est la ligne LI1.

Dans une deuxième trame, on transmet les points entourés d'une étoile et l'on examine ceux qui appartiennent aux lignes LI1 et LI2 ; ces derniers points sont situés de part et d'autre d'une deuxième ligne médiane qui est la ligne LP2.

Dans une troisième trame, on transmet les points entourés d'un triangle, compte tenu des points déjà transmis et afin d'obtenir la meilleure répartition possible, il faut considérer les points entourés d'un triangle faisant partie des lignes LP3 et LP4. Ces points sont situés de part et d'autre d'une troisième ligne médiane qui est la ligne LI3.

Dans une quatrième trame, on transmet les points entourés d'un rond et selon les raisons précitées, il faut considérer les points des lignes LI3 et LI4. Ces derniers points sont situés de part et d'autre d'une quatrième ligne médiane qui est la ligne LP4.

Cette manière de combiner les points amène un "pairage" de lignes sur l'image restituée, c'est-à-dire que les lignes LI1 et LP2, LI3 et LP4 d'une part sont plus rapprochées que les lignes LP2 et LI3 d'autre part. Ce pairage se manifeste de manière désagréable à l'oeil sur l'image restituée par le circuit 40.

Il est bien évident que l'on peut procéder de manières différentes pour combiner les points de deux lignes, mais quelles qu'elles soient on aboutit toujours à un manque d'homogénéité de l'image perçue ou à une qualité trop dégradée.

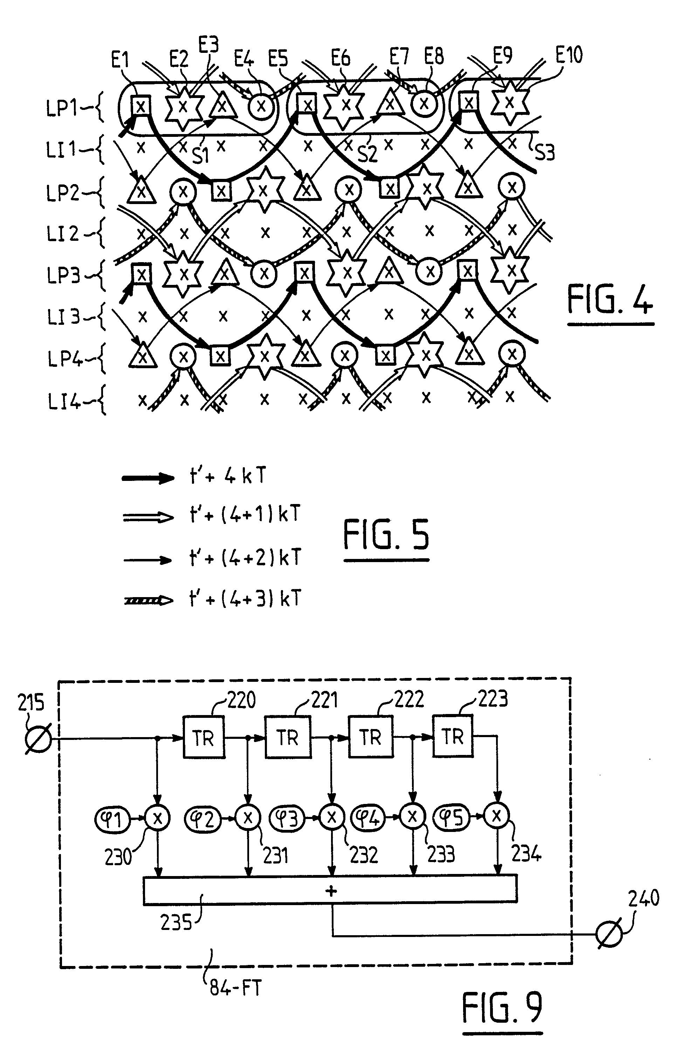

Conformément à l'invention, on propose une structure de sous-échantillonnage qui est montrée à la figure 4 et qui évite ces problèmes de manque d'homogénéité.

Selon cette structure de l'invention, seuls les points concernant les lignes de même parité sont transmis ; dans l'exemple de réalisation décrit, ce sont les points appartenant aux lignes paires ...,LP1, LP2, LP3, LP4,... Sur ces lignes, les points sont répartis en séries. Pour la clarté de la figure 4, ces séries sont uniquement référencées pour la ligne LP1. La série S1 comporte les points E1, E2, E3, E4, la série S2 les points E5, E6, E7, E8, la série S3 les points E9, E10... Les différents points de ces séries sont entourés de carrés, d'étoiles, de triangles et de ronds pour rappeler que les échantillons qui y sont affectés sont transmis selon une première, deuxième, troisième et quatrième trame respectivement. Si les séries des lignes LP1, LP3 correspondent verticalement, on notera qu'il y a un décalage de deux positions entre les séries des lignes LP1 et LP2 d'une part, et LP3 et LP4 d'autre part.

Pour former les trames de transmission, on combine les échantillons relatifs aux points appartenant à deux lignes consécutives paires LP1 et LP2. Ainsi, on obtient une ligne médiane se confondant avec la ligne LI1 pour les première et troisième trames de transmission. En ce qui concerne les deuxième et quatrième trames de transmission, les échantillons relatifs aux points appartenant aux lignes LP2 et LP3 d'une part et LP4 et LP5 (non visibles sur la figure) d'autre part, forment des lignes médianes qui se confondent avec la ligne LI2 et LI4. On constate que ces lignes médianes sont bien équidistantes et forment des images entrelacées. La figure 5 donne la légende des flèches qui lient les points selon les trames de transmission survenant aux instants $t' + 4kT$, $t' + (4k+1)T$, $t' + (4k+2)T$ et $t' + (4k+3)T$.

On va décrire maintenant un mode de réalisation mettant en oeuvre le principe de l'invention.

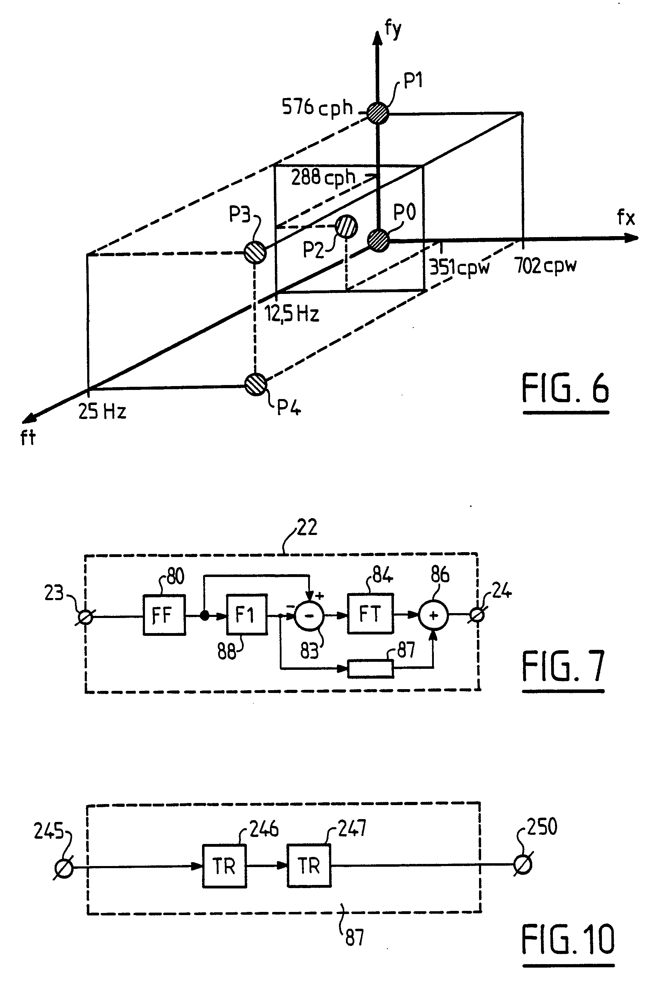

L'organe de filtrage 22 doit être conçu de manière à éviter les repliements de spectre d'image et doit donc être adapté à la structure d'échantillonnage de la figure 4. En effet, on rappelle qu'à toute structure d'échantillonnage périodique spatio-temporelle, correspond une structure périodique dans le domaine de Fourier. On pourra à ce sujet consulter l'article de KRETZ et SABATIER intitulé "Echantillonnage des images de télévision" paru dans les Annales de Télécommunications 36, No.3-4, 1981, pages 231-273. On peut montrer alors qu'à la structure de la figure 4 correspond une structure dans le domaine de Fourier montrée à la figure 6. Sur cette figure on a représenté par P0, P1, P2, P3 et P4 les points qui sont les centres des spectres spatio-temporels des images. Ces points sont repérés par des axes fx, fy et ft gradués respectivement cpw (unité de définition horizontale correspondant aux cycles par largeur d'image) en cph (unité correspondant aux cycles par hauteur d'image) et en Hz.

Le point P0 est à l'origine. Le point P1 est défini par fx = 0 cpw, fy = 576 cph et ft = 0 Hz, le point P2 par fx = 351 cpw, fy = 288 cph et ft = 12,5 Hz, le point P3 par fx = 702 cpω, fy = 576 cph et ft = 25 Hz, le point P4 par fx = 702 cpw, fy = 0 cph et ft = 25 Hz.

La fonction de filtrage apportée par l'organe 22, centrée sur P0 doit supprimer les composantes de l'image situées aux alentours des points restants P1, P2, P3 et P4. L'organe de filtrage 22 montré à la figure 7 respecte cette condition.

Cet organe comporte tout d'abord un premier filtre 80 dont l'entrée constitue l'entrée 23 de l'organe 22 et dont la sortie est reliée à l'entrée (+) d'un soustracteur 83. La sortie de ce soustracteur 83 est reliée à l'entrée d'un filtre 84 dont la sortie est reliée à une entrée d'un additionneur 86. L'autre entrée de cet additionneur est connectée à la sortie d'un organe de recalage temporel 87 dont l'entrée est reliée à la sortie d'un troisième filtre 88. L'entrée de ce filtre reçoit les signaux du premier filtre et sa sortie est connectée, en plus, à l'entrée (-) du soustracteur 83. La sortie de l'additionneur 86 constitue la sortie 24.

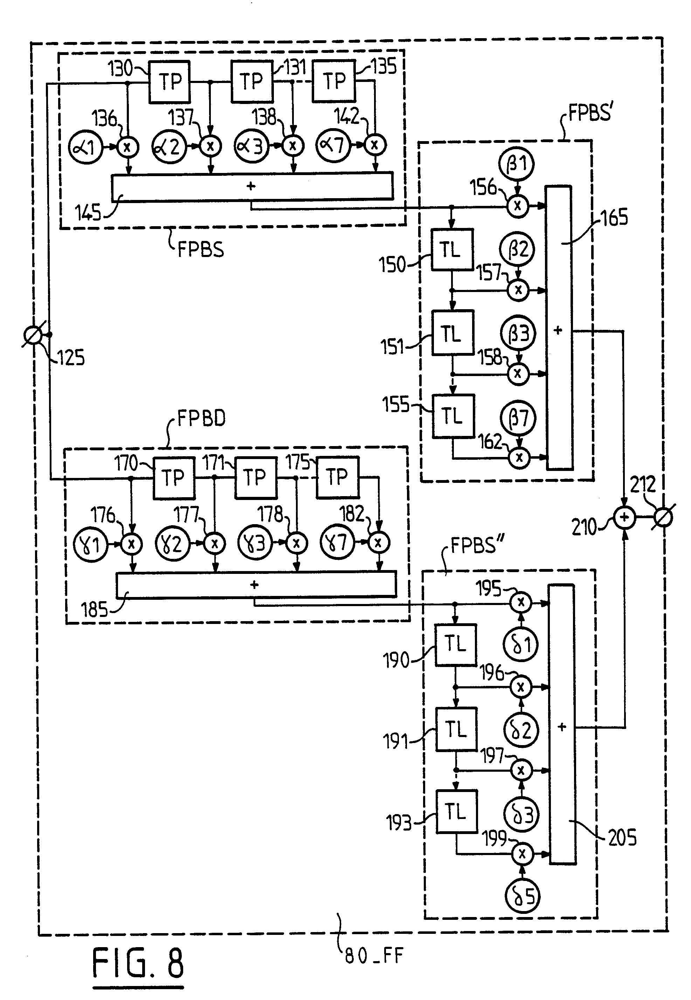

A la figure 8, on a représenté la structure du filtre 80.

Il se compose d'une première partie FPBS faisant office de filtre passe-bas (fréquence de coupure 78 cpw). Elle est connectée à l'entrée 125 du filtre 80. Cette partie FPBS est formée d'une chaîne de 6 éléments de retard 130 à 135 dont chacun amène un retard égal à la durée d'un point image TP (1/54 MHz). Des multiplieurs 136, 137, 138,..., 142 multiplient respectivement par des coefficients $\alpha_1$... $\alpha_7$ les échantillons présents à l'entrée de l'élément 130, à sa sortie, et aux sorties des éléments suivants ; un additionneur 145 effectue la somme de tous les résultats de ces multiplieurs. Le tableau I ci-dessous donne la valeur des coefficients $\alpha_1$ à $\alpha_7$ :

TABLEAU I

| $\alpha_1$ | $\alpha_2$ | $\alpha_3$ | $\alpha_4$ | $\alpha_5$ | $\alpha_6$ | $\alpha_7$ |
|---|---|---|---|---|---|---|
| 1/16 | 2/16 | 3/16 | 4/16 | 3/16 | 2/16 | 1/16 |

Le filtre FPBS est suivi d'un filtre FPBS′ ayant une fonction de filtrage passe-bas vertical dont la fréquence de coupure est 85 cph. Il est formé d'une chaîne de 6 éléments de retard 150 à 155 (amenant chacun un retard égal à la durée d'une ligne TL soit 32 $\mu$s) et de 7 multiplieurs 156 à 162 pour multiplier par des coefficients $\beta_1$... $\beta_7$ les échantillons à l'entrée de l'élément 150, à sa sortie et aux sorties des éléments suivants ; un additionneur 165 effectue la somme des résultats élaborés par les multiplieurs 156 à 162. Le Tableau II ci-dessous donne la valeur des coefficients $\beta$.

TABLEAU II

| $\beta_1$ | $\beta_2$ | $\beta_3$ | $\beta_4$ | $\beta_5$ | $\beta_6$ | $\beta_7$ |
|---|---|---|---|---|---|---|
| - 1/16 | - 3/16 | 1/16 | 6/16 | 1/16 | - 3/16 | - 1/16 |

A l'entrée 125 du filtre 80, se trouve connecté un filtre passe-bande horizontal FPBD (passant la bande 78 cpw à 455 cpw). Il est composé d'une chaîne de 6 éléments de retard 170 à 175 amenant chacun un retard égal à TP. Des multiplieurs 176 à 182 multiplient respectivement par $\gamma_1$..., $\gamma_7$ les échantillons à l'entrée de l'élément 170, à sa sortie et aux sorties des éléments suivants. Un additionneur 185 recueille tous les résultats des multiplieurs 176 à 182. Le Tableau III ci-dessous donne la valeur de ces coefficients $\gamma$.

TABLEAU III

| $\gamma_1$ | $\gamma_2$ | $\gamma_3$ | $\gamma_4$ | $\gamma_5$ | $\gamma_6$ | $\gamma_7$ |
|---|---|---|---|---|---|---|
| - 1/16 | 0 | 9/16 | 16/16 | 9/16 | 0 | - 1/16 |

Le filtre FPBD est suivi d'un filtre FPBS″ faisant office de filtre passe-bas vertical dont la fréquence de coupure est égale à 85 cph. Il est formé d'une chaîne de 4 éléments de retard 190 à 193, chacun amenant un retard égal à TL. Des multiplieurs 195 à 199 multiplient respectivement par $\delta_1$,..., $\delta_5$ les échantillons à l'entrée de l'élément 190, à sa sortie et aux sorties des éléments suivants. Un additionneur 205 recueille tous les résultats des multiplieurs 195 à 199. Le Tableau IV donne la valeur des coefficients $\delta$.

TABLEAU IV

| $\delta_1$ | $\delta_2$ | $\delta_3$ | $\delta_4$ | $\delta_5$ |
|------|------|-------|------|------|
| - 1/16 | 4/16 | 10/16 | 4/16 | - 1/16 |

La sortie 212 du filtre 80 est constituée par la sortie d'un additionneur 210 effectuant la somme des échantillons produits par les filtres FPBS' et FPBS".

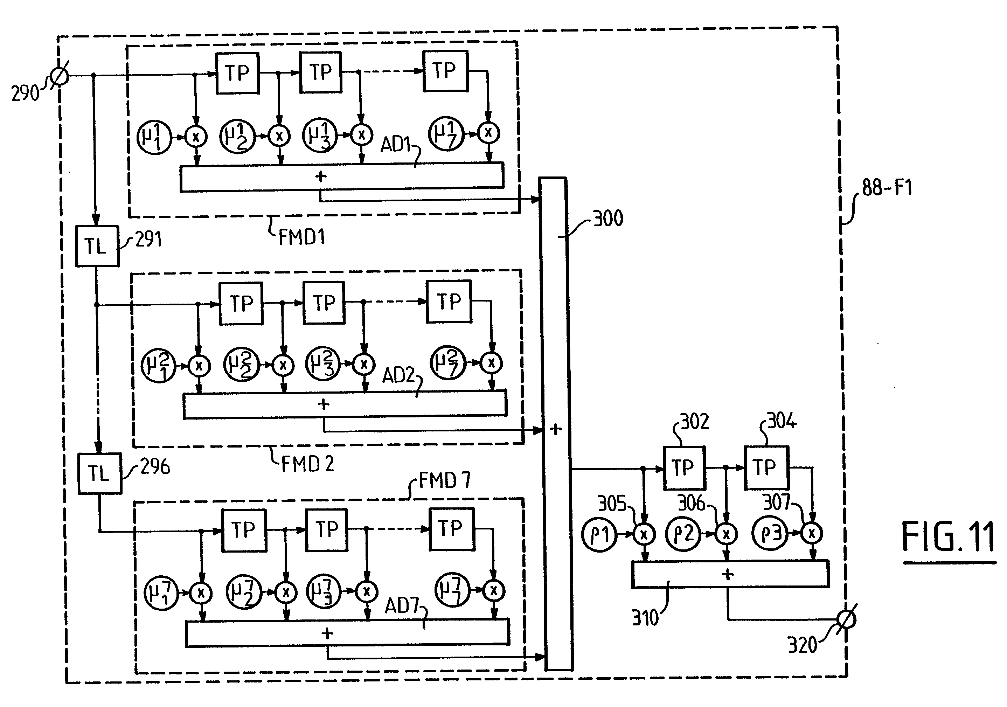

la figure 9 montre la structure du filtre 84. Il comporte, connectée à son entrée 215, une chaîne de quatre éléments de retard 220, 221, 222 et 223 amenant chacun un temps de retard égal à TR (durée T d'une trame) et cinq multiplieurs 230, 231, 232, 233 et 234 multipliant respectivement par $\phi_1$, $\phi_2$, $\phi_3$, $\phi_4$ et $\phi_5$ les échantillons à l'entrée de l'élément 220, à sa sortie et aux sorties des éléments suivants. Un additionneur 235 fournit sur la sortie 240 du filtre 84 la somme des résultats élaborés par les multiplieurs 230 à 234. Le Tableau V suivant donne la valeur des coefficients $\phi$.

TABLEAU V

| $\phi_1$ | $\phi_2$ | $\phi_3$ | $\phi_4$ | $\phi_5$ |
|------|------|------|------|------|
| 1/16 | 4/16 | 6/16 | 4/16 | 1/16 |

A la figure 10, on a représenté la structure de l'organe de recalage temporel 87. Il comporte, connecté à son entrée 245, un élément de retard 246 suivi d'un deuxième élément de retard 247 dont la sortie constitue la sortie 250 de l'organe 87, chacun de ces éléments amenant un retard égal à TR.

A la figure 11 on a montré la structure détaillée du filtre 88 F1. Il se compose d'une pluralité de filtres monodimensionnels FMD1, FMD2,... FMD7. Chacun de ces filtres est formé à partir d'une chaîne d'éléments de retard amenant un retard TP. A partir de cette chaîne on établit différents points de branchement pour que les échantillons retardés par cette chaîne soient multipliés par des coefficients $\mu^i_j$ où l'indice "i" rappelle le numéro du filtre monodimensionnel et l'indice "j" le rang de branchement ; i = 1 représente l'échantillon courant à l'entrée de la chaîne et j = 7 l'échantillon le plus retardé. L'entrée du filtre FMD1 est connectée à l'entrée 290 du filtre 88 et les entrées des autres filtres FMD2 à FMD7 sont reliées aux sorties d'éléments de retard 291,..., 296 dont chacun amène un retard TL égal à la durée d'une ligne. La sortie des filtres FMD1 à FMD7 est constituée par la sortie d'additionneurs AD1 à AD7 qui fournissent donc la somme pondérée des échantillons multipliés par les coefficients $\mu^i_j$ précités. Un additionneur 300 effectue la somme des résultats élaborés par les additionneurs AD1 à AD7.

Le signal de sortie de l'additionneur 300 est à son tour filtré par un filtre constitué par deux éléments de retard 302 et 304 amenant un retard égal à TP, connectés en cascade à la sortie de l'additionneur 300. Trois multiplieurs 305, 306 et 307 multiplient respectivement par $\rho_1$, $\rho_2$ et $\rho_3$ échantillons à l'entrée de l'élément 302, à sa sortie et à la sortie de l'élément 304. Un additionneur 310 effectue la somme des résultats des multiplieurs 305 à 307. La sortie 320 du filtre 88 est constituée par la sortie de cet additionneur 310. Les coefficients $\mu^i_j$ sont donnés par le tableau VI ci-dessous :

TABLEAU VI

| i \ j | 1 | 2 | 3 | 4 | 5 | 6 | 7 |
|---|---|---|---|---|---|---|---|
| 1 | $-\dfrac{1}{16}$ | 0 | 0 | 0 | 0 | 0 | $-\dfrac{1}{16}$ |
| 2 | 0 | 0 | 0 | 0 | 0 | 0 | 0 |
| 3 | 0 | 0 | $\dfrac{9}{32}$ | 0 | $\dfrac{9}{32}$ | 0 | 0 |
| 4 | 0 | 0 | 0 | 0 | 0 | 0 | 0 |
| 5 | 0 | 0 | $\dfrac{9}{32}$ | 0 | $\dfrac{9}{32}$ | 0 | 0 |
| 6 | 0 | 0 | 0 | 0 | 0 | 0 | 0 |
| 7 | $-\dfrac{1}{16}$ | 0 | 0 | 0 | 0 | 0 | $-\dfrac{1}{16}$ |

et les éléments $\rho$ par le Tableau VII :

TABLEAU VII

| $\rho_1$ | $\rho_2$ | $\rho_3$ |
|---|---|---|
| 1/4 | 1/2 | 1/4 |

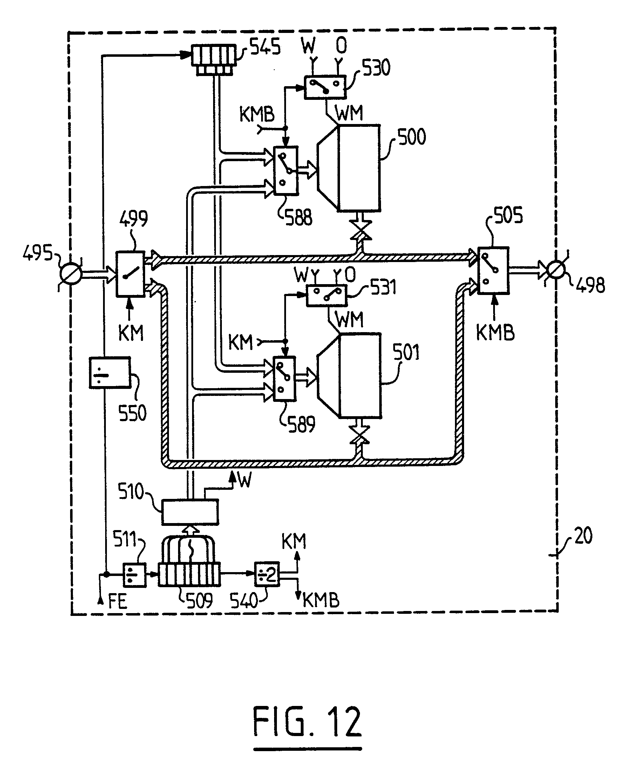

La figure 12 montre en détail l'organe de sous-échantillonnage 20. Il est muni d'une entrée 495 pour recevoir les échantillons filtrés par l'organe de filtrage 22 et d'une sortie 498 pour être connecté au circuit émetteur 5.

Les échantillons à l'entrée 495 se retrouvent à l'entrée d'un démultiplexeur 499 en vue d'être emmagasinés dans l'une des deux mémoires 500 et 501. Cet emmagasinage a lieu tour à tour dans ces deux mémoires, de sorte que lorsqu'une mémoire est en écriture, l'autre mémoire est en lecture. Un multiplexeur 505 permet d'appliquer les informations de l'une des mémoires 500 et 501 à la sortie 498.

La position des démultiplexeur 499 et multiplexeur 505 est fixée respectivement par des signaux complémentaires KM et KMB indiquant ainsi que lorsque les informations venant de la borne 495 se trouvent à l'accès de données de la mémoire 500, l'accès de données de la mémoire 501 se trouve en relation avec la sortie 498 et que lorsque l'accès de données de la mémoire 500 est relié à cette sortie 498, les informations de 495 sont présentes aux accès de données de la mémoire 501.

L'adressage en écriture de ces mémoires 500 et 501 est effectué au moyen d'un compteur 509 auquel est associé un circuit de transcodage 510, ceci afin d'effectuer un adressage sélectif dans les mémoires 500 et 501 selon des critères de la structure d'échantillonnage conforme à l'invention. Le compteur 509 progresse au rythme de l'échantillonnage fixé par un signal issu d'un diviseur 511 divisant par deux la fréquence d'un signal à 54 MHz FE provenant par exemple de la base de temps de la caméra 1. Outre le code d'adresse d'écriture pour les mémoires 500 et 501, le signal W est dérivé pour valider l'écriture de ces mémoires ; ce signal est appliqué à la commande d'écriture WM des mémoires 500 et 501 par l'intermédiaire de multiplexeurs 530 et 531 à deux positions, commandés respectivement par les signaux complémentaires KM et KMB. Les signaux KM et KMB proviennent d'une bascule 540 connectée en bout du compteur 509 ; comme la capacité de ce compteur correspond au nombre de points d'une image de haute définition, les signaux KM et KMB changent de valeur à chaque nouvelle image.

L'adressage en lecture des mémoires 500 et 501 est effectué directement au moyen d'un compteur 545 progressant au rythme des signaux provenant d'un diviseur de fréquence 550 divisant la fréquence du signal FE.

Pour appliquer le code de lecture ou d'écriture on utilise deux multiplexeurs 588 et 589 rattachés respectivement aux mémoires 500 et 501.

Le circuit de transcodage 510 doit effectuer la transformation de code d'adresse en conformité avec la structure d'échantillonnage montrée à la figure 4 et selon l'ordre des trames de transmission, en outre cette transformation doit être telle que lorsque le compteur de lecture 545 s'incrémente naturellement d'une unité à chaque impulsion du diviseur 550, les échantillons relatifs aux points transmis soient transmis selon l'ordre de compatibilité précité.

Ainsi le récepteur 40 recevra directement les signaux vidéo qu'il pourra traiter sans dispositifs supplémentaires.

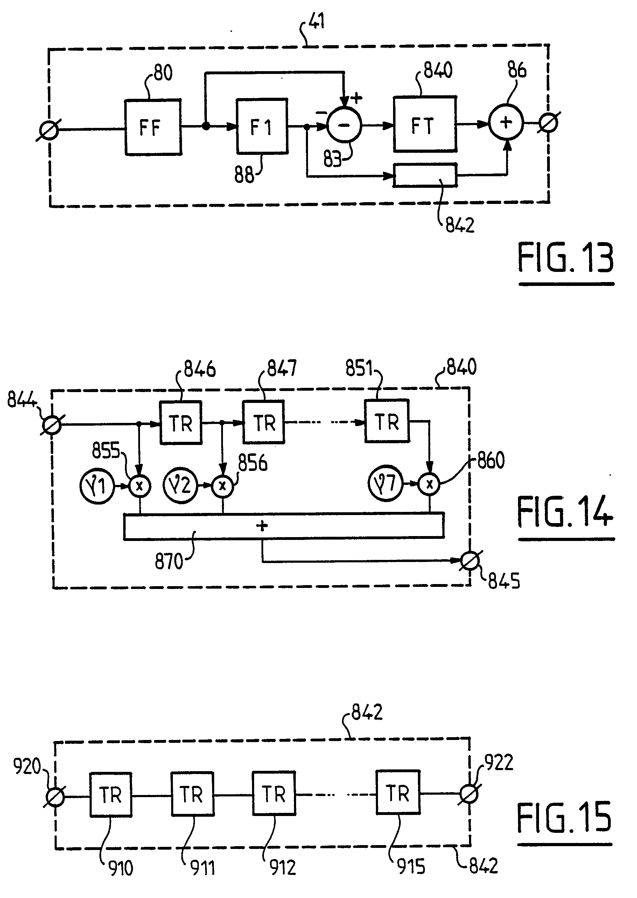

Pour pouvoir visualiser des images de haute qualité, il faudra disposer les échantillons selon l'ordre dans lequel ils sont produits ; pour cela, on utilise un organe de réarrangement 630 de sorte que l'organe d'interpolation 41' puisse déterminer les échantillons correspondant aux points non transmis. Cet organe 630 a la même structure que l'organe 20. Cependant, le circuit de transcodage sera programmé de manière différente ; il sera programmé pour rétablir cet ordre naturel. L'organe d'interpolation 41 a la structure montrée en détail à la figure 13 ; sa structure est calquée sur celle du filtre anti-repliement montrée à la figure 7. Les éléments sont identiques sauf en ce qui concerne le filtre 84 et l'organe de recalage temporel 87 qui sont remplacés par un filtre 840 et par l'organe 842.

Le filtre 840 est muni d'une entrée 844 et d'une sortie 845 (figure 14). A cette entrée 844 est connectée une série de six éléments de retard 846, 847,..., 851 amenant chacun un retard égal à TR. A l'entrée de l'élément 846 est connecté un multiplieur 855 et aux sorties des éléments 847,..., 851 des multiplieurs 856,..., 860 respectivement. Les différents multiplieurs effectuent des opérations de multiplication par $v_1$, $v_2$,..., $v_7$. Un additionneur 870 dont la sortie constitue la sortie 845 effectue la somme de tous les produits élaborés par ces multiplieurs. Le Tableau VIII suivant donne les valeurs des différents $v$.

TABLEAU VIII

| $v_1$ | $v_2$ | $v_3$ | $v_4$ | $v_5$ | $v_6$ | $v_7$ |
|------|------|------|------|------|------|------|
| 1/16 | 2/16 | 3/16 | 4/16 | 3/16 | 2/16 | 1/16 |

L'organe de recalage temporel 842 est formé d'une série de six éléments de retard 910, 911, 912,..., 915 amenant chacun un retard TR, cette série étant connectée entre l'entrée 920 et la sortie 922 de l'organe 942 (figure 15).

**Revendications**

1. Système de transmission d'images de télévision à haute définition par un canal présentant une bande passante relativement étroite, système comportant d'une part, une partie émission munie d'un organe de prise de vue pour fournir des échantillons qui définissent les points formant lesdites images, points placés en des positions qui sont réparties dans les images selon des lignes de parités différentes, d'un organe de filtrage pour filtrer lesdits échantillons, d'un organe de sous-échantillonnage pour prélever certains échantillons à la sortie de l'organe de filtrage et d'un circuit émetteur pour transmettre sur le canal selon quatre trames d'émission les échantillons prélevés et d'autre part, au moins une partie réception munie d'un circuit récepteur pour recevoir les échantillons provenant du circuit émetteur, caractérisé en ce que l'organe de sous-échantillonnage prélève des échantillons de la manière suivante en considérant des séries de quatre positions successives placées sur des lignes de même parité et en considérant un décalage de deux positions entre deux lignes adjacentes de ladite même parité :
- la première trame d'émission transmet, pour chaque ligne de ladite parité et pour sa première ligne adjacente de ladite même parité, des échantillons relatifs à la première position des séries,
- la deuxième trame d'émission transmet, pour chaque ligne de ladite parité et pour sa deuxième ligne adjacente de ladite même parité, des échantillons relatifs à la deuxième position des séries,
- la troisième trame d'émission transmet, pour chaque ligne de ladite parité et pour sa première ligne adjacente de ladite même parité, des échantillons relatifs à la troisième position des séries,
- la quatrième trame d'émission transmet pour chaque ligne de ladite parité et pour sa deuxième ligne adjacente de ladite même parité, des échantillons relatifs à la quatrième position des séries,
tandis que la partie réception est munie en outre d'un premier circuit de visualisation pour transformer les échantillons transmis en une image à définition normale.

2. Emetteur convenant pour le système de la revendication 1, comprenant la partie émission.

3. Récepteur convenant pour le système de la revendication 1, convenant pour la partie réception.

FIG.1

FIG. 2

FIG. 3

□ : t+4kT

✡ : t+(4k+1)T

△ : t+(4k+2)T

○ : t+(4k+3)T

FIG. 4

$$t' + 4 kT$$

$$t' + (4+1) kT$$

$$t' + (4+2) kT$$

$$t' + (4+3) kT$$

FIG. 5

FIG. 9

2-VII-PHF 87-578

FIG. 6

FIG. 7

FIG.10

FIG. 8

FIG. 11

EP 0 311 191 A1

5-VII-PHF 87-578

FIG. 12

FIG.13

FIG.14

FIG.15

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 146 713  (NIPPON HOSO KYOKAI) <br> * Page 13, ligne 4 - page 17, ligne 14; page 35, ligne 2 - page 39, ligne 5 * <br> --- | 1-3 | H 04 N    7/00 <br> H 04 N    7/12 |
| A | US-A-4 605 950  (A.A. GOLDBERG et al.) <br> * Colonne 5, ligne 26 - colonne 6, ligne 41 * <br> --- | 1-3 | |
| A | FERNSEH & KINO-TECHNIK, vol. 41, no. 1/2, janvier/février 1987, pages 23-27,30-32, Heidelberg, DE; H. SAUERBURGER: "Breit- und schmalbandige kompatible einkanalige HDTV-ÜBERTRAGUNG <br> * En entier * <br> --- | 1 | |
| D,A | N.H.K. LABORATORIES NOTE, no. 304, septembre 1984, pages 1-12, N.H.K., Tokyo, JP; Y. NINOMIYA et al.: "A single channel HDTV broadcast system - The muse" <br> * En entier * <br> ----- | 1-3 | |

**DOMAINES TECHNIQUES RECHERCHES (Int. Cl.4)**

H 04 N

Le présent rapport a été établi pour toutes les revendications

| Lieu de la recherche | Date d'achèvement de la recherche | Examinateur |
|---|---|---|
| LA HAYE | 13-12-1988 | BOSCH F.M.D. |